# EUROPEAN PATENT APPLICATION

(11) **EP 4 714 533 A1**
(43) Date of publication of application: **25.03.2026**
(21) Application number: 25189282.4
(22) Date of filing: 14.07.2025
(51) Int. Cl.: B01F 29/80, B01F 35/30

(54) **SLURRY MIXER FOR SECONDARY BATTERY ELECTRODE MATERIAL AND SECONDARY BATTERY MANUFACTURING APPARATUS INCLUDING SLURRY MIXER**

(30) Priority: 20.09.2024 KR 20240127649
(71) Applicant: SAMSUNG SDI CO., LTD., Yongin-si, Gyeonggi-do 17084 (KR)
(72) Inventor: KIM, Seonguk, 17084 Yongin-si (KR); LEE, Hoogil, 17084 Yongin-si (KR); KIM, Jongseon, 17084 Yongin-si (KR); SEO, Wonsub, 17084 Yongin-Si (KR); PYO, Young-Hak, 17084 Yongin-Si (KR)
(74) Representative: Marks & Clerk LLP

(57) **Abstract**

The present disclosure relates to a slurry mixer for a secondary battery electrode material and a secondary battery manufacturing apparatus including the slurry mixer. The slurry mixer includes an inner cylinder (50) including an inner cylinder body (54) configured to accommodate a slurry to be mixed and an upper support member (51) having a ring shape and fixed to an upper end portion of the inner cylinder body. An outer cylinder (40) including an outer cylinder body is configured to rotatably accommodate the inner cylinder, with the outer cylinder including a fixed flange (41) fixed to the upper end portion of the outer cylinder body, and the outer cylinder including a cover (42) mounted on the fixed flange and positioned on the upper support member. An elastic sealing portion (55) is mounted on the cover, with the elastic sealing portion being elastically deformable, the elastic sealing portion including a lower end portion (55a) in contact with the upper support member, and the elastic sealing portion being configured to prevent the slurry from leaking through a space between the cover and the upper support member.

## Description

### BACKGROUND

### 1. Field of the Disclosure

The present disclosure relates to a mixer for a slurry to be applied to an electrode of a secondary battery, and more specifically, to a slurry mixer for a secondary battery electrode material and a secondary battery manufacturing apparatus including the slurry mixer.

### 2. Discussion of Related Art

Unlike primary batteries that cannot be charged, secondary batteries can be charged and discharged. In general, a secondary battery includes an electrode assembly including a positive electrode plate, a negative electrode plate, and a separator, and an exterior material (case or can) that accommodates the electrode assembly. Electrode assemblies may be classified as wound type electrode assemblies or stacked type electrode assemblies according to the configuration of the electrode plates and separators. A wound type electrode assembly is referred to as a jelly roll, and a stacked type electrode assembly is referred to as a stack.

A positive electrode plate and a negative electrode plate constituting an electrode assembly may be manufactured through a process of coating a substrate with a slurry including an active material for an electrode material, a process of rolling an electrode plate coated with a slurry, and a slitting process of cutting the rolled electrode plate in a longitudinal direction (that is, an electrode plate transfer direction).

The slurry is a mixture of an active material, a material agent, a solvent, a binder, and the like and is prepared using a slurry mixer. The slurry mixer includes a fixed outer cylinder and an inner cylinder that rotates inside the outer cylinder.

In the case of conventional slurry mixers, when an inner cylinder rotates, a slurry may overflow to outside of the mixer due to a centrifugal force, and the overflow may contaminate parts of the slurry mixer such as gears. This may cause corrosion of a device and thereby increase maintenance costs. Thus, there is a need for a slurry mixer that does not overflow during use.

The information disclosed in this section is for enhancement of understanding of the background of the present disclosure and may contain information that does not constitute a related (or prior) art.

### SUMMARY OF THE DISCLOSURE

The present disclosure is directed to providing a slurry mixer for a secondary battery electrode material. The slurry mixer has a structure preventing a slurry from overflowing to outside of an inner cylinder during operation and thereby not causing contamination of a device. The slurry mixer has a simple structure that is easily disassembled and assembled, and maintenance cost of the slurry mixer is low. The present disclosure is also directed to a secondary battery manufacturing apparatus including the slurry mixer.

According to one aspect of the present disclosure, a slurry mixer for a secondary battery electrode material includes an inner cylinder including an inner cylinder body configured to accommodate a slurry to be mixed, and an upper support member having a ring shape and fixed to an upper end portion of the inner cylinder body, an outer cylinder including an outer cylinder body configured to rotatably accommodate the inner cylinder, a flange fixed to the upper end portion of the outer cylinder body, and a cover mounted on the fixed flange and positioned on the upper support member, and an elastic sealing portion mounted on the cover, the elastic sealing portion is elastically deformable, the elastic sealing portion has a lower end portion in contact with the upper support member, and the elastic sealing portion is configured to prevent the slurry from leaking through a space between the cover and the upper support member.

According to another aspect of the present disclosure, a secondary battery manufacturing apparatus includes a slurry mixer including (i) an inner cylinder which includes an inner cylinder body configured to accommodate a slurry to be mixed, and an upper support member having a ring shape and fixed to an upper end portion of the inner cylinder body, (ii) an outer cylinder that includes an outer cylinder body configured to rotatably accommodate the inner cylinder, a flange fixed to the upper end portion of the outer cylinder body, and a cover mounted on the fixed flange and positioned on the upper support member, and (iii) an elastic sealing portion mounted on the cover, the elastic sealing portion being elastically deformable, the elastic sealing portion including a lower end portion in contact with the upper support member, and the elastic sealing portion being configured to prevent the slurry from leaking through a space between the cover and the upper support member, a driving unit connected to the inner cylinder of the slurry mixer and configured to provide a rotational force to the inner cylinder, and a stirring unit configured to stir the slurry accommodated in the inner cylinder as the inner cylinder rotates.

At least some of the above and other features of the invention are set out in the claims.

Aspects and features of the present disclosure are not limited to those described above, and other aspects and features not specifically mentioned herein will be clearly understood by those skilled in the art from the descriptions below.

### BRIEF DESCRIPTION OF THE DRAWINGS

The drawings attached to the present specification illustrate embodiments of the present disclosure and further describe aspects and features of the present disclosure together with the detailed description of the present disclosure. The present disclosure should not be construed as being limited to the drawings, in which:
FIG. 1 is a top perspective view of an exterior of a prismatic battery cell manufactured using a secondary battery manufacturing apparatus according to an embodiment of the present disclosure;
FIG. 2 is a cross-sectional view along line A-A of FIG. 1;
FIG. 3 is an example view of a battery module in which battery cells of FIG. 1 are arranged;
FIG. 4 is an example view of a secondary battery pack including a battery module;
FIG. 5 is a conceptual view of the secondary battery pack of FIG. 4 installed in a vehicle;
FIG. 6 is a cross-sectional view for describing a configuration of a slurry mixer for a secondary battery electrode material according to an embodiment of the present disclosure;
FIG. 7 is an enlarged view of portion Z of FIG. 6;
FIG. 8 is a perspective view of an elastic sealing portion shown in FIG. 7;
FIG. 9 is a view of a structure of the elastic sealing portion of FIG. 8;
FIGS. 10 and 11 are cross-sectional views for describing operational effects of the elastic sealing portion shown in FIG. 9;
FIGS. 12 and 13 are views of other examples of the elastic sealing portion applicable to the slurry mixer according to an embodiment of the present disclosure;
FIGS. 14 and 15 are views of other examples of the elastic sealing portion applicable to the slurry mixer according to an embodiment of the present disclosure;
FIG. 16 is an enlarged cross-sectional view of an outer seal of FIG. 7;
FIGS. 17 and 18 are views of other examples of the outer seal shown in FIG. 16; and
FIG. 19 is a configuration view of a secondary battery manufacturing apparatus including a slurry mixer according to an embodiment of the present disclosure.

### DETAILED DESCRIPTION OF EXAMPLE EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Any numerical range disclosed and/or recited includes all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an element "above (or below)" or "on (under)" another element may mean that the element may contact the upper (or lower) surface of the element, and another element may also be interposed between the element and the element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

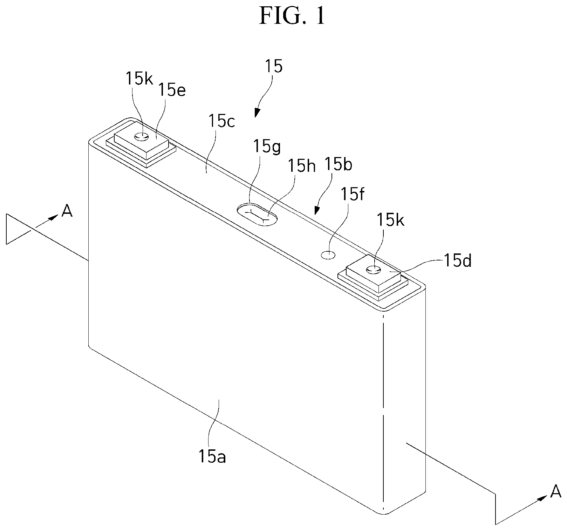

FIG. 1 is a top perspective view of an exterior of a prismatic battery cell manufactured using a secondary battery manufacturing apparatus according to embodiments of the present disclosure.

A case 15a defines an outer appearance of the prismatic secondary battery. The case 15a may be made of a conductive metal, such as aluminum, aluminum alloy, or nickel-plated steel. The case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case. The terminals 15d and 15e may protrude outward through the cap plate 15c.

In the cap plate 15c, an electrolyte injection port 15f may be formed. A gas discharge hole 15g may be formed and a vent, i.e., a gas discharge device 15h, may be joined to the gas discharge hole 15g. The gas discharge device 15h is opened by gas generated inside the battery and allows the gas to be discharged to outside of the battery.

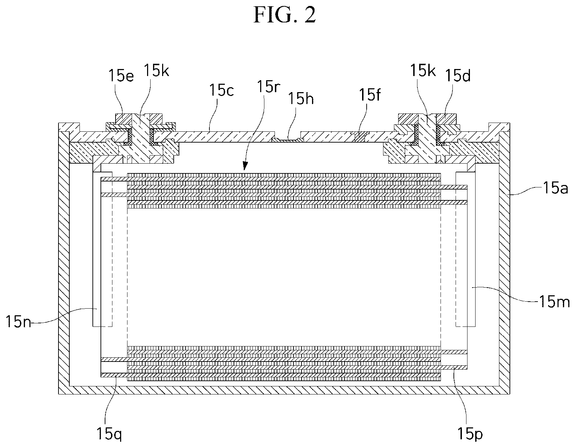

FIG. 2 is a cross-sectional view along line A-A in FIG. 1.

An electrode assembly 15r may be formed by winding or stacking a first electrode plate, a separator, and a second electrode plate, which are formed as thin plates or films. When the electrode assembly 15r is a wound stack, a winding axis may be parallel to the longitudinal direction (e.g., the Y direction) of the case. In some other embodiments, the electrode assembly 15r is a stack type rather than a winding type. The shape of the electrode assembly 15r is not limited in the present disclosure.

The electrode assembly 15r may be a Z-stack electrode assembly in which a positive electrode plate and a negative electrode plate are provided to sides of a separator, which is then bent into a Z-stack. One or more electrode assemblies may be stacked such that long sides of the electrode assemblies are adjacent to each other and accommodated in the case. The number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab (e.g., a first uncoated portion) that is a region where the first electrode active material is not provided. The first electrode tab 15p may act as a current flow path between the first electrode plate and the first current collector 15m. In some embodiments, when the first electrode plate is made, the first electrode tab 15p is formed by being cut to protrude to a side of the electrode assembly 15r. In other embodiments the first electrode tab 15p protrudes to a side of the electrode assembly 15r more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region where the second electrode active material is not provided. The second electrode tab 15q may act as a current flow path between the second electrode plate and the second current collector 15n. In some embodiments, the second electrode tab 15q may be formed by being cut to protrude to the other side (e.g., the opposite side) of the electrode assembly when the second electrode plate is manufactured. In other embodiments the second electrode plate may protrude to the other side of the electrode assembly more than (e.g., farther than or beyond) the separator without being separately cut.

The separator prevents or substantially reduces short-circuits between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the first terminal 15d and the second terminal 15e by connection members 15k. In some embodiments, the connection members 15k have an outer peripheral surface that is threaded, and the connection members 15k may be fastened to the first terminal 15d and the second terminal 15e by screwing. However, the present disclosure is not limited thereto. For example, the connection members 15k may also be coupled to the first terminal 15d and the second terminal 15e by riveting or welding.

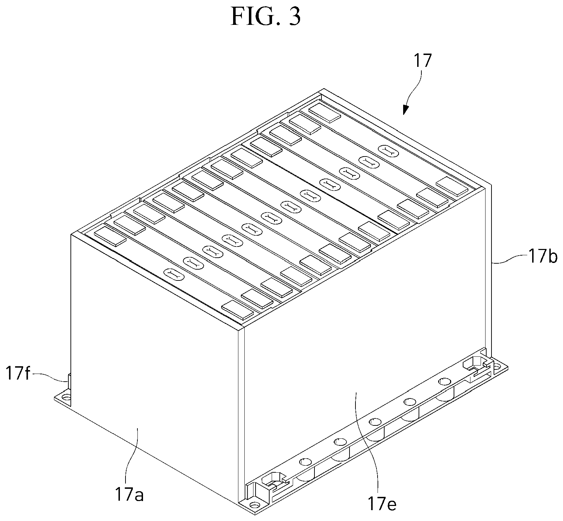

FIG. 3 is a perspective view of a secondary battery module in which secondary batteries are arranged according to embodiments of the present disclosure. With the increase in secondary battery capacity for driving electric vehicles, ESS (energy storage system), or the like, a secondary battery module may be made by arranging a plurality of secondary battery cells transversely and/or longitudinally and connecting the battery cells together. The plurality of secondary batteries may be arranged in a space defined by a pair of facing end plates 17a and 17b and a pair of facing side plates 17e and 17f. The secondary batteries may be arranged and provided in a number to obtain desired voltage and current specifications.

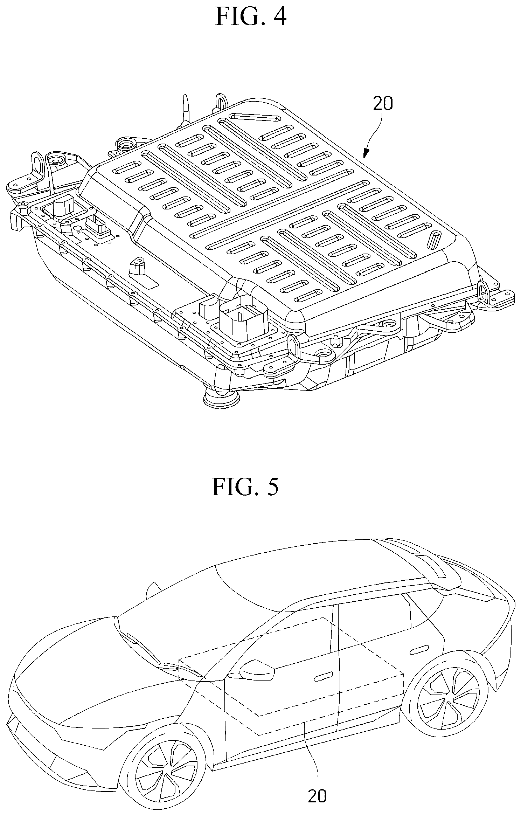

FIG. 4 is a perspective view of a battery pack 20 according to embodiments of the present disclosure. Referring to FIG. 4, the battery pack 20 may include an assembly to which individual batteries are electrically connected, with a pack housing accommodating the batteries. In the drawings, components including a bus bar, a cooling unit, external terminals for electrically connecting batteries, etc., are not shown.

The battery pack 20 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but the present disclosure is not limited thereto. FIG. 5 shows a vehicle that includes the battery pack 20 shown in FIG. 4 on the lower part thereof. The vehicle may operate by (e.g., may be powered by) receiving power from the battery pack 20.

As the positive electrode active material for a secondary battery according to embodiments of the disclosure, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide. Examples of such a material include a lithium nickel-based oxide, a lithium cobalt-based oxide, a lithium manganese-based oxide, a lithium iron phosphate-based compound, a cobalt-free nickel-manganese-based oxide, or a combination thereof. As further examples, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector (substrate) and a positive electrode active material layer formed on the current collector. The positive electrode active material layer may include a positive electrode active material and may further include a binder and/or a conductive material.

The amount of the positive electrode active material may be in a range of about 90 wt% to about 99.5 wt% based on 100 wt% of the positive electrode active material layer. The amount of the binder and the conductive material may be in a range of about 0.5 wt% to about 5 wt%, respectively, based on 100 wt% of the positive electrode active material layer.

The substrate may be aluminum (Al). But the present disclosure is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon include graphite, such as natural graphite or artificial graphite, and examples of the amorphous carbon include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to one embodiment, the silicon-carbon composite may be in the form of silicon particles and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

The negative electrode active material layer may include, for example, about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one of a copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt. The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, and may be used alone or in combination of two or more. In addition, when a carbonate-based solvent is used, a mixture of cyclic carbonate and chain carbonate may be used.

Depending on the type of lithium secondary battery, a separator may be positioned between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. But the present disclosure is not limited to these examples.

The organic material and the inorganic material may be mixed in a coating layer or may be in the form of a coating layer including (or containing) an organic material and a coating layer including (or containing) an inorganic material that are stacked on each other.

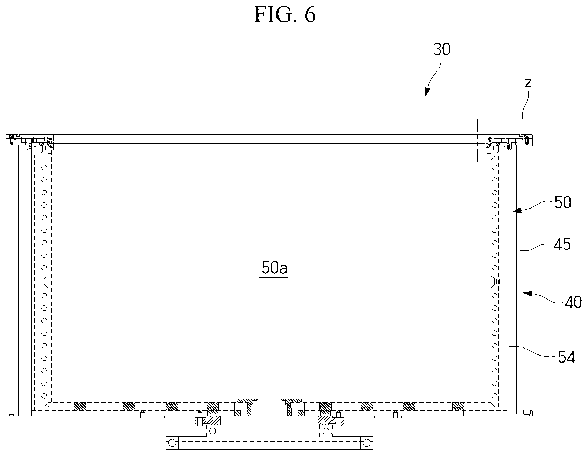

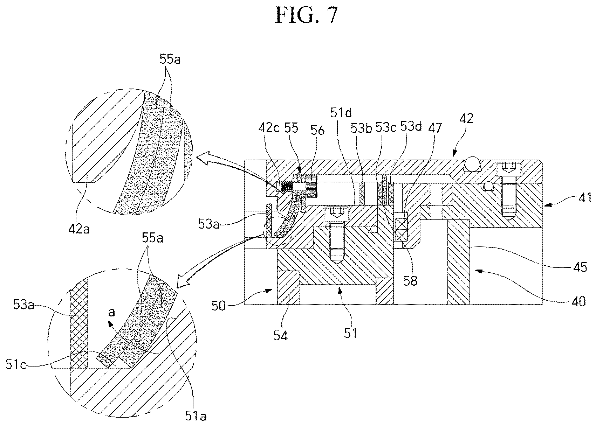

FIG. 6 is a cross-sectional view of a configuration of a slurry mixer 30 for secondary battery electrode material according to an embodiment of the present disclosure. FIG. 7 is an enlarged view of portion Z of FIG. 6. The slurry mixer 30 mixes an active material, a conductive material, a binder, a solvent, and additives. The slurry mixer 30 may include an inner cylinder 50 and an outer cylinder 40.

As shown in FIGS. 6 and 7, the slurry mixer 30 for a secondary battery electrode material according to the present embodiment may include the inner cylinder 50, the outer cylinder 40, an elastic sealing portion 55, a plurality of overflow prevention barriers 53a, 53b, 53c, and 53d, and an outer seal 58.

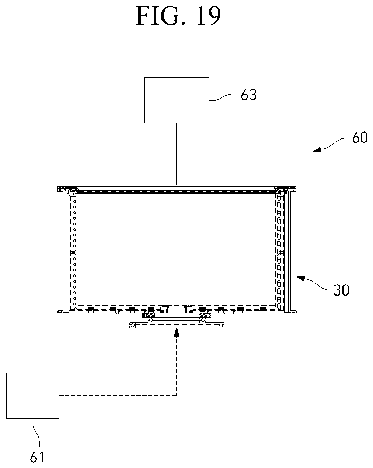

The inner cylinder 50 may include an inner cylinder body 54 and an upper support member 51. The inner cylinder body 54 may provide an inner space 50a for accommodating a slurry and may have a shape of a cylinder that opens upward. The inner cylinder 50 may rotate by receiving a rotational force from a mixer driving unit 61 (see FIG. 19). As the inner cylinder 50 rotates, a slurry therein may be mixed.

The upper support member 51 may be an assembly fixed to an upper end portion of the inner cylinder body 54 and may be formed in the shape of a ring. A first flat portion 51c, an inclined portion 51a, and a second flat portion 51d may be formed on an upper surface of the upper support member 51.

The first flat portion 51c and the second flat portion 51d may be flat surfaces provided at different heights relative to slurry mixer 30. As shown in FIG. 7, the first flat portion 51c may be positioned at an end portion in a direction towards the inner space 50a of the upper support member 51 and may be in line contact with an edge of a lower end portion of a seal member 55a.

The inclined portion 51a connects the first flat portion 51c and the second flat portion 51d and is inclined upward from the first flat portion 51c toward the second flat portion 51d. The inclined portion 51a may support the seal member 55a and may cause the seal member to maintain a bent state such that the lower end portion of the seal member faces the inner space of the inner cylinder. That is, the lower end portion of the seal member 55a may be elastically supported in a direction of arrow a. By supporting the seal member 55a in this way, the seal member 55a is bent, and an edge of the lower end portion of the seal member 55a may be in contact with the first flat portion 51c.

The second flat portion 51d may be a flat surface connected to the inclined portion 51a and may be spaced a certain distance from a lower surface of a cover 42 (described below). The outer seal 58 may be provided on the second flat portion 51d.

The outer cylinder 40 may be a cylindrical container that rotatably accommodates the inner cylinder 50. The outer cylinder 40 may be fixed relative to the slurry mixer 30 structure. The outer cylinder 40 may include an outer cylinder body 45, a fixed flange 41, and the cover 42.

The outer cylinder body 45 may be a cylindrical member that has a certain diameter and rotatably accommodates the inner cylinder 50. A wall surface of the outer cylinder body 45 and a wall surface of the inner cylinder body 54 may be maintained at a distance from each other.

In addition, the fixed flange 41 may be fixed to an upper end of the outer cylinder body 45 and be ring shaped. The fixed flange 41 is positioned outside the inner cylinder 50 with a bearing 47 interposed therebetween. The inner cylinder 50 may rotate while supporting the bearing 47. The bearing 47 may support the rotation of the inner cylinder 50.

The cover 42 may be positioned on the upper support member 51 while mounted on the fixed flange 41. The cover 42 may cover the upper support member 51. A seal support 42a may be provided at an inner end portion of the cover 42, that is, an end portion facing the inner space 50a of the inner cylinder. The seal support 42a may be formed as a protrusion that supports the elastic sealing portion 55 by being coupled to the elastic sealing portion 55.

The plurality of overflow prevention barriers 53a, 53b, 53c, and 53d may be provided between the upper support member 51 and the cover 42. The overflow prevention barrier may prevent an outflow of a slurry through a space between the upper support member 51 and the cover 42. That is, the overflow prevention barrier prevents a slurry from leaking through a space between the cover 42 and the upper support member 51. The overflow prevention barrier may also assist a function of the elastic sealing portion 55.

The overflow prevention barriers in the present embodiment may include first, second, third, and fourth overflow prevention barriers 53a, 53b, 53c, and 53d. The first overflow prevention barrier 53a may be positioned on an upper surface of the first flat portion 51c. In particular, the first overflow prevention barrier 53a may be welded and fixed to the first flat portion 51c and may be configured to block an outflow of a slurry. As such, most slurry overflowing from the inner cylinder 50a may be blocked by the first overflow prevention barrier 53a.

The second, third, and fourth overflow prevention barriers 53b, 53c, and 53d may be welded and fixed to an upper surface of the second flat portion 51d. The second, third, and fourth overflow prevention barriers 53b, 53c, and 53d may be spaced apart from each other and substantially perpendicular to the second flat portion 51d. A plurality of second, third, and fourth overflow prevention barriers may be integrally formed on the upper surface of the second flat portion 51d, are provided substantially parallel and spaced apart from each other, and extend to a certain height.

The outer seal 58 may be mounted to some overflow prevention barriers. The outer seal 58 may be a ring-shaped member that has a certain thickness and is elastically deformable. In a state in which the outer seal 58 is connected to the overflow prevention barrier, an upper end portion of the outer seal 58 may be in contact with a lower surface of the cover. The outer seal 58 serves to prevent an outflow of a slurry. The outer seal 58 may be made of, for example, TEFLON^{®}, silicone, or silicon.

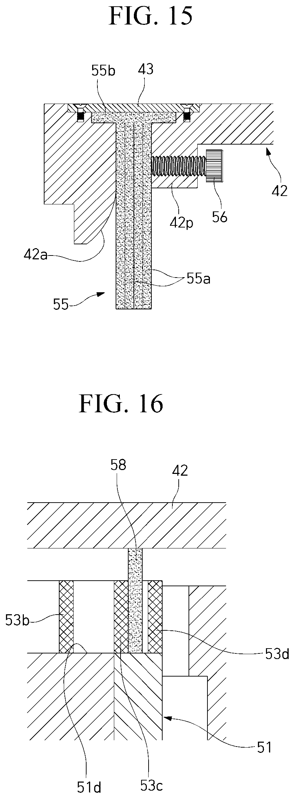

The outer seal 58 of FIG. 7 and a peripheral portion thereof are enlarged and shown in a cross-sectional view of FIG. 16. In the present embodiment, the outer seal 58 may be fixed in contact with the third overflow prevention barrier 53c. As such, the outer seal 58 is a band-shaped member having a certain thickness and height so as to be in contact with an outer surface of the third overflow prevention barrier 53c.

An upper end portion of the outer seal 58 may be in contact with the lower surface of the cover 42, and a lower end portion of the outer seal 58 may be in contact with the second flat portion 51d. The upper end portion of the outer seal 58 may slide relative to the cover 42. The outer seal 58 may be fixed to the third overflow prevention barrier 53c with an adhesive, but the present disclosure is not limited thereto.

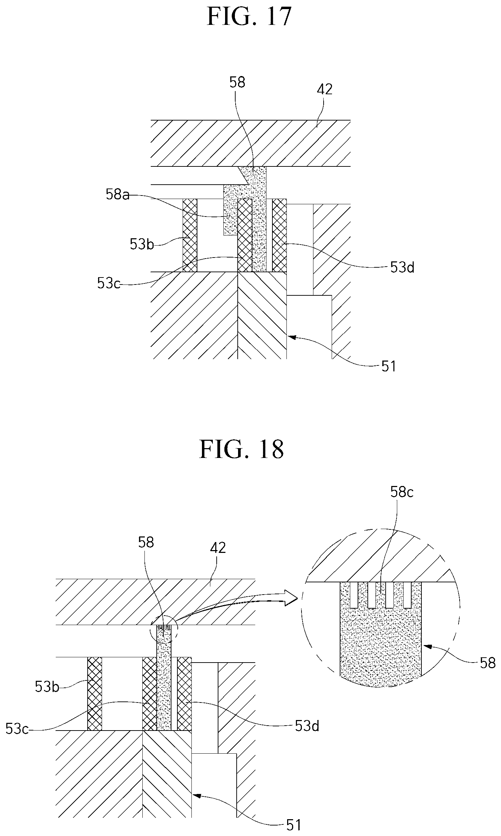

Other examples of the outer seal 58 shown in FIG. 16 are shown in FIGS. 17 and 18.

As shown in FIG. 17, a holder portion 58a may be provided with the outer seal 58. The holder portion 58a has a shape that wraps around an upper side portion of the third overflow prevention barrier 53c. By providing the holder portion 58a, a slurry cannot penetrate between the third overflow prevention barrier 53c and the outer seal 58.

The outer seal 58 shown in FIG. 18 shown includes a plurality of split portions 58c at an upper end portion. The split portions 58c may be formed by splitting the upper end portion of the outer seal 58 and may increase flow resistance of a micro-gap between the outer seal 58 and the cover 42. As such, by providing the split portion 58c, an outflow of a slurry can be further suppressed.

The elastic sealing portion 55 is mounted below the cover 42 and is elastically deformable. A lower end portion of the elastic sealing portion 55 may be in contact with the first flat portion 51c of the upper support member 51 to prevent a slurry from leaking through a space between the cover 42 and the upper support member 51. The elastic sealing portion 55 may be in contact with and coupled to the seal support 42a of the cover 42.

The elastic sealing portion 55 may include a plurality of seal members 55a and a compression fixing portion. The seal members 55a may be elastic parts that have a certain thickness and are elastically deformable. The lower end portions of the seal members 55a may be in elastic contact with the first flat portion 51c of the upper support member 51. A structure in which three seal members overlap each other is shown in FIG. 7, but the number of seal members may vary. In addition, while all of the seal members are depicted in contact with the first flat portion 51c, in other cases only some seal members may be in contact with the first flat portion 51c. The seal member 55a may be made of TEFLON^{®}, rubber, or silicone.

The compression fixing member may serve to fix the overlapping seal members to the cover 42. In FIG. 7, a screw 56 is used as the compression fixing portion. The screw 56 may be coupled to a screw hole 42c while extending through the plurality of seal members 55a. The screw hole 42c is a female screw hole horizontally formed in the seal support 42a. Since the screw 56 is coupled to the screw hole 42c, the seal member 55a is fixed and pressed toward the seal support 42a.

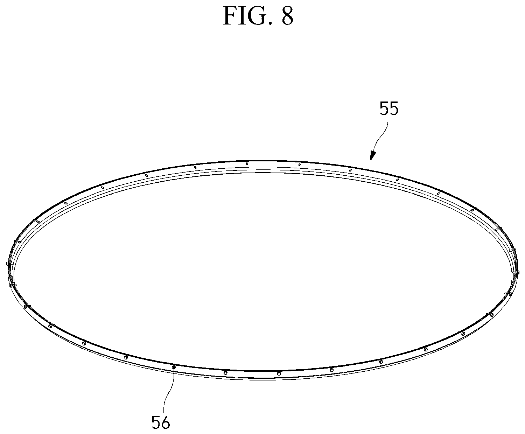

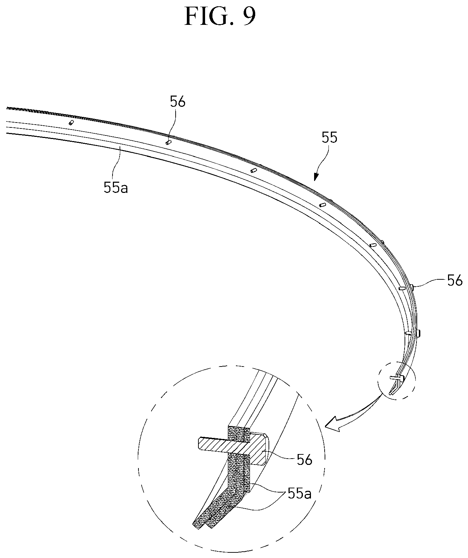

FIG. 8 is a perspective view of the elastic sealing portion 55 shown in FIG. 7. FIG. 9 is a cutaway perspective view illustrating a structure of the elastic sealing portion 55.

The elastic sealing portion 55 may be ring-shaped. Screws 56 may be spaced at intervals about the circumference of the seal member 55a. The screws 56 may be coupled to the screw holes 42c while extending through the seal members 55a.

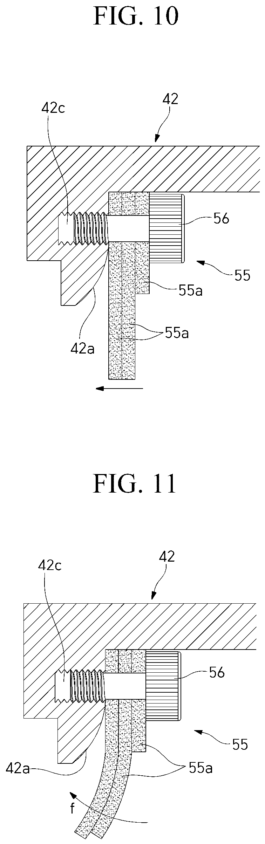

FIGS. 10 and 11 are cross-sectional views of the elastic sealing portion 55 shown in FIG. 9.

Referring to FIG. 10, the plurality of seal members 55a are fixed and pressed toward the seal support 42a by the screw 56. The seal members 55a may not be bent when an external force is not applied to them, and, thus, may have the form of a flat plate. When the cover 42 to which the elastic sealing portion 55 is fixed is mounted on the upper support member 51, the seal members 55a may be pressed in a direction of arrow f by receiving a reaction force from the inclined portion 51a.

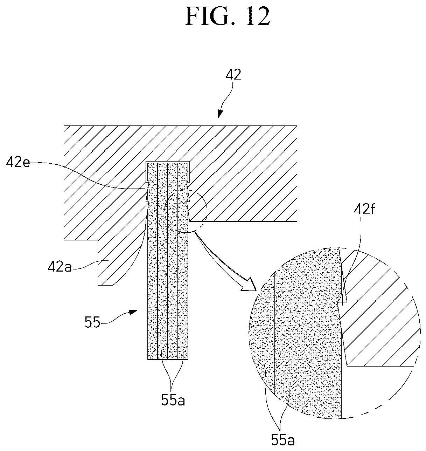

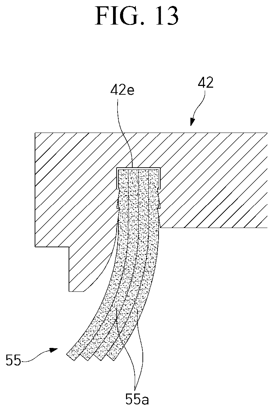

FIGS. 12 and 13 are views of other examples of the elastic sealing portion of a slurry mixer according to embodiments of the present disclosure.

As discussed above, the elastic sealing portion 55 of FIG. 11 may be mounted by screw 56. FIG. 12 shows an alternative in which the elastic sealing portion 55 is fitted to the restraining groove. In particular, a restraining groove 42e may be formed in the lower surface of the cover 42. The restraining groove 42e may open downward toward the upper support member 51 and extend in a circumferential direction. A tooth portion 42f may be formed inside the restraining groove 42e. The tooth portion 42f may be a tooth-type protrusion formed on an inner wall opposite to the restraining groove 42e and may prevent the elastic sealing portion 55 inserted into the restraining groove 42e from falling downward.

The elastic sealing portion 55 may be formed by overlapping the plurality of seal members 55a, which may all be the same size. A portion of the elastic sealing portion 55 inserted into the restraining groove 42e may be fixed with an adhesive. The elastic sealing portion 55 may be pressed by the tooth portion 42f while fitted into the restraining groove 42e. In this way, the elastic sealing portion 55 is pressed by the tooth portion 42f and fixed within the restraining groove 42e.

As shown in FIG. 12, the elastic sealing portion 55 may be in an unfolded state while inserted into the restraining groove 42e. When the cover 42 into which the elastic sealing portion 55 is fitted is mounted on the upper support member 51, the elastic sealing portion 55 may be pushed by the inclined portion 51a to be in a bent state as shown in FIG. 13.

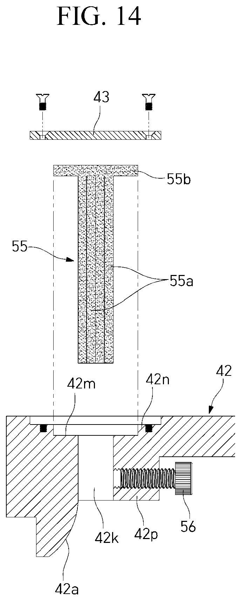

FIGS. 14 and 15 are views of other examples of the elastic sealing portion for a slurry mixer according to embodiments of the present disclosure.

As shown, the elastic sealing portion 55 may further include a locking portion 55b. The locking portion 55b may be integrated with an upper end portion of the seal member 55a. The locking portion 55b may be seated in a seating groove 42m formed in the cover 42. The locking portion 55b may prevent the elastic sealing portion 55 from falling downward from the cover 42. A lower end portion of the seal member 55a may be in elastic contact with the first flat portion 51c.

A through-hole 42k, the seating groove 42m, and a cover groove 42n may be formed in the cover 42. The through-hole 42k may be a passage through which the seal member 55a extends downward. The seal member 55a extending through the through-hole 42k is bent inward while supported on the inclined portion 51a, and the lower end portion thereof may be in line contact with the first flat portion 51c.

The seating groove 42m may include the through-hole 42k in an inner area thereof. The locking portion 55b may be fitted into the seating groove 42m. When the locking portion 55b is mounted in the seating groove 42m, the elastic sealing portion 55 may not fall downward.

In addition, the cover groove 42n may be further formed with the seating groove 42m. The cover groove 42n may include the seating groove 42m in an inner area thereof. A push cover 43 may be fitted into the cover groove 42n as a coupling maintenance portion. While the push cover 43 is mounted in the cover groove 42n, the push cover 43 may push the locking portion 55b toward the seating groove 42m to maintain a connection of the elastic sealing portion 55 to the cover 42.

A compression fixing portion may be further provided below the cover 42. The compression fixing portion may fix and press the seal member toward the seal support 42a. The compression fixing portion may include a screw holder 42p and the screw 56. The screw holder 42p may be a nut portion integrated with the lower surface of the cover 42. The screw 56 presses and supports the seal member 55a toward the seal support 42a while coupled to the screw holder 42p.

FIG. 19 is a configuration view of a secondary battery manufacturing apparatus 60 including a slurry mixer according to an embodiment of the present disclosure.

As shown, the secondary battery manufacturing apparatus 60 according to the present embodiment may include a slurry mixer 30, a driving unit 61, and a stirring unit 63.

The driving unit 61 is connected to an inner cylinder 50 of the slurry mixer provides a rotational force for rotating the inner cylinder. The driving unit 61 may include a motor, a reducer, and a controller. A rotation speed of the inner cylinder 50 may be controlled by the controller.

In addition, the stirring unit 63 may stir a slurry accommodated in the inner cylinder 50 as the inner cylinder rotates. The stirring unit 63 may include a stirring blade inserted into the inner cylinder 50 to stir the slurry.

In the slurry mixer for a secondary battery electrode material of the present disclosure, since a slurry does not overflow to the outside of an inner cylinder during operation, contamination of the device due to the slurry is not caused. Productivity with the device is thereby improved. In addition, a structure is simple, is easily disassembled and assembled, and has reduced maintenance costs.

Although the present disclosure has been described above with respect to embodiments thereof, the present disclosure is not limited thereto. Various modifications and variations can be made thereto by those skilled in the art within the scope of the present disclosure.

Embodiments are set out in the following clauses:
1. A slurry mixer for a secondary battery electrode material, the slurry mixer comprising:
   an inner cylinder comprising an inner cylinder body configured to accommodate a slurry to be mixed and an upper support member having a ring shape and fixed to an upper end portion of the inner cylinder body;
   an outer cylinder comprising an outer cylinder body configured to rotatably accommodate the inner cylinder, a flange fixed to the upper end portion of the outer cylinder body, and a cover mounted on the fixed flange and positioned on the upper support member; and
   an elastic sealing portion mounted on the cover, the elastic sealing portion being elastically deformable, the elastic sealing portion including a lower end portion in contact with the upper support member, and the elastic sealing portion being configured to prevent the slurry from leaking through a space between the cover and the upper support member.
2. The slurry mixer according to clause 1, further comprising an overflow prevention barrier disposed between the upper support member and the cover, the overflow prevention barrier being configured to assist in preventing the slurry from leaking through the space between the upper support member and the cover.
3. The slurry mixer according to clause 1 or 2, wherein the elastic sealing portion comprises:
   one or more seal members, each of the one or more seal member having thickness, each of the one or more seal members being elastically deformable, and each of the one or more seal members having a lower end portion in elastic contact with an upper surface of the upper support member; and
   a fixing member fixing the one or more seal members to the cover.
4. The slurry mixer according to clause 1 or 2, wherein a restraining groove which opens downward toward the upper support member and extends in a circumferential direction is formed in a lower surface of the cover,
   wherein the elastic sealing portion comprises one or more seal members, each of which has a certain thickness, is elastically deformable, and has a lower end portion in elastic contact with an upper surface of the upper support member, and
   wherein an upper end portion of the seal member is fitted into and coupled to the restraining groove.
5. The slurry mixer according to clause 1 or 2, wherein the elastic sealing portion comprises a seal member having a thickness, the seal member being elastically deformable, and the seal member comprises a locking portion at an upper end portion,
   wherein the cover comprises a hole through which the seal member extends so that a lower end portion of the seal member contacts the upper support member, and a seating groove configured to accommodate the locking portion, and
   wherein the slurry mixer further comprises a coupling portion configured to maintain coupling of the elastic sealing portion and the cover.
6. The slurry mixer according to any one of clauses 3 to 5, wherein an inclined portion is formed on the upper support member to support the seal member and maintain a bent state of the seal member such that a lower end portion of the seal member faces an inner space of the inner cylinder.
7. The slurry mixer according to clause 2 or any clause dependent on clause 2, wherein a plurality of overflow prevention barriers are integrated with an upper surface of the upper support member, with the overflow prevention barriers being parallel to each other.
8. The slurry mixer according to clause 7, wherein an outer seal configured to prevent the slurry from leaking is mounted at some of the overflow prevention barriers.
9. The slurry mixer according to clause 8, wherein the outer seal is a ring-shaped member that is elastically deformable, and an upper end portion of the outer seal is in contact with a lower surface of the cover and connected to the overflow prevention barrier.
10. A secondary battery manufacturing apparatus comprising:
   a slurry mixer comprising (i) an inner cylinder that comprises an inner cylinder body configured to accommodate a slurry to be mixed and an upper support member having a ring shape and fixed to an upper end portion of the inner cylinder body, (ii) an outer cylinder that comprises an outer cylinder body configured to rotatably accommodate the inner cylinder, a flange fixed to the upper end portion of the outer cylinder body, and a cover mounted on the fixed flange and positioned on the upper support member, and (iii) an elastic sealing portion mounted on the cover, the elastic sealing portion being elastically deformable, the elastic sealing portion including a lower end portion in contact with the upper support member, and the elastic sealing portion being configured to prevent the slurry from leaking through a space between the cover and the upper support member;
   a driving unit connected to the inner cylinder of the slurry mixer and configured to provide a rotational force to the inner cylinder; and
   a stirring unit configured to stir the slurry accommodated in the inner cylinder as the inner cylinder rotates.
11. The secondary battery manufacturing apparatus according to clause 10, further comprising an overflow prevention barrier disposed between the upper support member and the cover, the overflow prevention barrier being configured to assist in preventing the slurry from leaking through the space between the upper support member and the cover.
12. The secondary battery manufacturing apparatus according to clause 10 or 11, wherein the elastic sealing portion comprises:
   one or more seal members, each of the one or more seal members having thickness, each of the one or more seal members being elastically deformable, and each of the one or more seal members having a lower end portion in elastic contact with an upper surface of the upper support member; and
   a fixing member fixing the one or more seal members to the cover.
13. The secondary battery manufacturing apparatus according to clause 10 or 11, wherein a restraining groove which opens downward toward the upper support member and extends in a circumferential direction is formed in a lower surface of the cover,
   wherein the elastic sealing portion comprises one or more seal members, each of which has a certain thickness, is elastically deformable, and has a lower end portion in elastic contact with an upper surface of the upper support member, and
   wherein an upper end portion of the seal member is fitted into and coupled to the restraining groove.
14. The secondary battery manufacturing apparatus according to clause 10 or 11, wherein the elastic sealing portion comprises a seal member having a thickness, the sealing member being elastically deformable, and seal member comprises a locking portion at an upper end portion,
   wherein the cover comprises a hole through which the seal member extends so that a lower end portion of the seal member contacts the upper support member, and a seating groove configured to accommodate the locking portion, and
   the slurry mixer further comprises a coupling portion configured to maintain coupling of the elastic sealing portion and the cover.
15. The secondary battery manufacturing apparatus according to clause 11 or any clause dependent on claim 11, wherein a plurality of the overflow prevention barriers are integrated with an upper surface of the upper support member, with the overflow prevention barriers being parallel to each other, and
   wherein an outer seal configured to prevent the slurry from leaking is mounted at some overflow prevention barriers.

## Claims

1. A slurry mixer for a secondary battery electrode material, the slurry mixer comprising:
an inner cylinder comprising an inner cylinder body configured to accommodate a slurry to be mixed and an upper support member having a ring shape and fixed to an upper end portion of the inner cylinder body;
an outer cylinder comprising an outer cylinder body configured to rotatably accommodate the inner cylinder, a flange fixed to the upper end portion of the outer cylinder body, and a cover mounted on the fixed flange and positioned on the upper support member; and
an elastic sealing portion mounted on the cover, the elastic sealing portion being elastically deformable, the elastic sealing portion including a lower end portion in contact with the upper support member, and the elastic sealing portion being configured to prevent the slurry from leaking through a space between the cover and the upper support member.

2. The slurry mixer as claimed in claim 1, further comprising an overflow prevention barrier disposed between the upper support member and the cover, the overflow prevention barrier being configured to assist in preventing the slurry from leaking through the space between the upper support member and the cover.

3. The slurry mixer as claimed in claim 1 or 2, wherein the elastic sealing portion comprises:
one or more seal members, each of the one or more seal members having a thickness, each of the one or more seal members being elastically deformable, and each of the one or more seal members having a lower end portion in elastic contact with an upper surface of the upper support member; and
a fixing member fixing the one or more seal members to the cover.

4. The slurry mixer as claimed in claim 1 or 2, wherein a restraining groove which opens downward toward the upper support member and extends in a circumferential direction is formed in a lower surface of the cover,
wherein the elastic sealing portion comprises one or more seal members, each of which has a certain thickness, is elastically deformable, and has a lower end portion in elastic contact with an upper surface of the upper support member, and
wherein an upper end portion of the seal member is fitted into and coupled to the restraining groove.

5. The slurry mixer as claimed in claim 1 or 2, wherein the elastic sealing portion comprises a seal member having a thickness, the seal member being elastically deformable, and the seal member comprises a locking portion at an upper end portion,
wherein the cover comprises a hole through which the seal member extends so that a lower end portion of the seal member contacts the upper support member, and a seating groove configured to accommodate the locking portion, and
wherein the slurry mixer further comprises a coupling portion configured to maintain coupling of the elastic sealing portion and the cover.

6. The slurry mixer as claimed in any one of claims 3 to 5, wherein an inclined portion is formed on the upper support member to support the seal member and maintain a bent state of the seal member such that a lower end portion of the seal member faces an inner space of the inner cylinder.

7. The slurry mixer as claimed in claim 2 or any claim dependent on claim 2, wherein a plurality of overflow prevention barriers are integrated with an upper surface of the upper support member, with the overflow prevention barriers being parallel to each other.

8. The slurry mixer as claimed in claim 7, wherein an outer seal configured to prevent the slurry from leaking is mounted at some of the overflow prevention barriers.

9. The slurry mixer as claimed in claim 8, wherein the outer seal is a ring-shaped member that is elastically deformable, and an upper end portion of the outer seal is in contact with a lower surface of the cover and connected to the overflow prevention barrier.

10. A secondary battery manufacturing apparatus comprising:
a slurry mixer as claimed in any preceding claim;
a driving unit connected to the inner cylinder of the slurry mixer and configured to provide a rotational force to the inner cylinder; and
a stirring unit configured to stir the slurry accommodated in the inner cylinder as the inner cylinder rotates.
